# DEMANDE DE BREVET EUROPEEN

(11) **EP 1 774 849 A1**
(43) Date de publication de la demande: **18.04.2007**
(21) Numéro de dépôt: 06021203.2
(22) Date de dépôt: 10.10.2006
(51) Int. Cl.: A01K 63/00

(54) **Contenant, notamment aquarium, pliant et auto-portant**

(30) Priorité: 11.10.2005 FR 0510369
(71) Demandeur: CCRG SARL, 92120 Montouge (FR)
(72) Inventeur: Boselli, Daniel, 75007 Paris (FR)
(74) Mandataire: Lemoyne, Didier

(57) **Abrégé**

Contenant, notamment aquarium destiné à l'élevage des poissons d'agrément, du type constitué par une enceinte étanche (1) repliable sur elle-même dans un même plan, en vue de son transport, et qui est formée par une partie de bâche imperméable souple associée avec au moins une face latérale rigide pour définir un volume utile lors d'un déploiement en vue de son utilisation, caractérisé en ce que l'enceinte étanche (1) est formée par une pluralité de faces latérales (3, 4, 5, 6) quadrangulaires, toutes rigides, reliées entre elles pour définir un volume et un fond de forme correspondante constituée par une bâche souple (2), l'une au moins desdites faces rigides étant formée par au moins deux parties (5a, 5b - 6a, 6b) repliables sur elles-mêmes de manière à permettre le pliage de l'aquarium pour son transport.

## Description

La présente invention concerne un contenant, notamment un aquarium, plus particulièrement, mais non exclusivement, destiné à l'élevage des poissons d'agrément.

Les aquariums connus de ce type sont de manière classique, constitués d'une structure destinée à être remplie d'eau, formant une carcasse rigide ouverte à sa partie supérieure et dont ses parois latérales sont aptes à supporter la pression de l'eau, et coopèrent avec des moyens d'étanchéité pour définir une enceinte aquatique étanche.

Les parois latérales de ces aquariums sont transparentes, et sont réalisées en verre ou en résine synthétique.

Les avantages à cette matière sont de pouvoir résister aux chocs, de permettre la réalisation d'une structure légère, et également de pouvoir assurer aisément le collage des parois entre elles ou sur un châssis correspondant aux arêtes de la carcasse, pour l'obtention d'une enceinte aquatique étanche, par interposition ou non de mastic.

Par contre, l'inconvénient de la résine synthétique réside dans le fait de sa faible résistance à l'abrasion, ce qui lui donne une certaine opacité après un temps d'utilisation. De plus, elle est sensible aux rayures.

Pour ces dernières raisons, il est souvent préféré le verre, mais d'autres inconvénients se posent alors, qui sont principalement le poids et la fragilité du verre, ainsi que la mise en oeuvre des moyens d'étanchéité.

En ce qui concerne le poids, le problème se pose surtout dans les aquariums de grande dimension, qui nécessitent des supports d'une planéité parfaite, de manière à éviter le vrillage de la structure, voire la cassure des vitres.

De plus, le poids associé à la fragilité des parois en verre et à l'encombrement global de ces aquariums pose également des problèmes de stockage, d'expédition et de manutention.

Lors de telles réalisations et pour éviter ces divers inconvénients, notamment celui de l'encombrement, et faciliter ainsi la vente par correspondance par exemple, le demandeur a d'abord imaginé de rendre la structure démontable, de manière à pouvoir la stocker ou l'expédier en pièces détachées dans un colis d'encombrement minimum, une notice de montage jointe permettant l'assemblage de la structure par l'utilisateur.

La principale difficulté rencontrée dans la réalisation d'un aquarium selon ce principe concerne les moyens d'étanchéité à mettre en oeuvre par l'utilisateur qui sont d'un maniement délicat lorsqu'il s'agit de colle spéciale en présence du verre ou de manipulation d'un mastic.

C'est ainsi que le demandeur a déjà proposé une solution qui a fait l'objet du brevet d'invention français n° 91 08748 et qui a pour objet de remédier à tous les inconvénients précités, tout en lui conférant une étanchéité parfaite et un agrément visuel inaltérable.

Pour ce faire, l'aquarium est constitué d'une structure destinée à être remplie d'eau et qui est formée d'une carcasse rigide ouverte à sa partie supérieure, et dont ses parois latérales sont aptes à supporter la pression de l'eau, et coopèrent avec des moyens d'étanchéité pour définir une enceinte aquatique étanche, réalisée indépendamment de la carcasse rigide et constituée au moins partiellement par une bâche imperméable souple, amovible, repliable sur elle-même sur un même plan et dont la forme déployée correspond sensiblement à celle du volume interne de la carcasse rigide, qui n'a qu'un rôle de support, dans lequel est logée la bâche de l'aquarium, la pression d'eau lors de son introduction assurant le plaquage de ladite bâche contre les parois latérales de la carcasse, ladite bâche comportant une paroi latérale de façade située en vis-à-vis d'une paroi de façade de la carcasse et qui est constituée d'un matériau transparent rigide.

Si cette solution a remédié à un bon nombre d'inconvénients, il n'en reste pas moins vrai que l'enceinte aquatique étanche repliable sur elle-même lors d'une non utilisation et déployable lors d'une utilisation, reste tributaire d'une carcasse rigide avec laquelle elle doit coopérer nécessairement pour le maintien des trois autres parois latérales et du fond de l'enceinte aquatique formant bâche, augmentant ainsi le coût de l'ensemble.

Afin de remédier à cet inconvénient, le demandeur a également proposé une autre solution ayant fait l'objet du brevet français n° 97 08501 décrivant un aquarium du type précité, mais dans lequel l'enceinte étanche est formée par deux parois frontales quadrangulaires, transparentes et rigides, situées en vis-à-vis pour définir une face avant et une face arrière dudit aquarium, lesquelles faces sont reliées entre elles par des panneaux souples d'extrémités latérales et de fond constitué par la bâche, de manière à permettre la mise en forme de ladite enceinte et à la rendre auto-porteuse par la seule pression de l'eau sur ses parois lors de sa mise en service.

Néanmoins bien qu'apportant des avantages certains à la solution précédente, un tel aquarium nécessite des renforcements au niveau de ses deux parois latérales souples, et donc l'adjonction de panneaux rigides externes, ainsi que des moyens pour les maintenir en place.

La présente invention a pour but de remédier à ce nouvel inconvénient et concerne à cet effet un contenant, notamment un aquarium destiné à l'élevage des poissons d'agrément, du type constitué par une enceinte étanche repliable sur elle-même dans un même plan, en vue de son transport, et qui est formée par une partie de bâche imperméable souple associée avec au moins une face latérale rigide pour définir un volume utile lors d'un déploiement en vue de son utilisation, caractérisé en ce que l'enceinte étanche est formée par une pluralité de faces latérales quadrangulaires, toutes rigides, reliées entre elles pour définir un volume de section prédéterminée et un fond de forme correspondante constitué par la bâche souple, l'une au moins desdites faces rigides étant formée par au moins deux parties repliables sur elles-mêmes, préférentiellement vers l'intérieur de l'enceinte, par l'intermédiaire d'une articulation, de manière à permettre le pliage de celle-ci ou son développement, la rendant auto-porteuse par la seule pression de l'eau, lors de sa mise en service.

De cette manière et selon le but recherché, toutes les faces latérales en caoutchouc ont été supprimées tout en conservant la notion de pliage intégral de l'aquarium.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels :
La figure 1 est une vue développée d'une bâche souple constituant le fond d'un aquarium par exemple, associée à une face avant, une face arrière et deux faces latérales transparentes et rigides, après assemblage de celles-ci par rapport à la bâche de fond souple, selon l'invention.
La figure 2 représente en perspective un aquarium selon l'invention, après assemblage complet du développé selon la figure 1, après pliage de l'une des faces latérales, en vue de son pliage complet.
La figure 3 représente en perspective un aquarium selon l'invention, après assemblage complet du développé selon la figure 1, après pliage de deux faces latérales, en vue de son pliage complet.
La figure 4 est une vue en perspective d'un aquarium selon les figures précédentes, entièrement déployé, en vue de son utilisation.
La figure 5 est une vue d'un aquarium selon les figures précédentes, en position entièrement repliée, en vue de son stockage ou de son transport.

Le contenant ou l'aquarium selon un exemple d'application de l'invention, représenté sur les figures est constitué par une enceinte étanche 1 repliable sur elle-même dans un même plan en vue de son transport.

Elle est formée par une partie de bâche imperméable souple 2, associée à des faces latérales afin de définir un volume utile lors de leur déploiement en vue de l'utilisation de l'aquarium.

D'une manière générale selon le présent exemple, l'enceinte étanche 1 est formée par une pluralité de faces latérales 3, 4, 5, 6 quadrangulaires, toutes transparentes et rigides, reliées entre elles pour définir un volume de section prédéterminée et un fond de forme correspondante constitué par la bâche souple 2, l'une au moins desdites faces transparentes et rigides étant formée par au moins deux parties 5a, 5b - 6a, 6b repliables sur elles-mêmes, préférentiellement vers l'intérieur de l'enceinte 1, par l'intermédiaire d'une articulation 7, de manière à permettre le pliage de celle-ci ou son développement, la rendant auto-porteuse par la seule pression de l'eau, lors de sa mise en service.

Plus précisément, selon l'exemple de réalisation représenté sur les figures, l'enceinte étanche 1 constituant l'aquarium forme un volume parallélépipédique présentant une face avant 4, une face arrière 3 et deux faces latérales 5, 6, deux de ces faces en vis-à-vis 5, 6 étant chacune formée par deux parties 5a, 5b - 6a, 6b repliables sur elles-mêmes, de forme et de dimension identiques, les deux autres 3, 4 étant d'un seul tenant.

Préférentiellement, toujours selon le présent exemple, les faces opposées repliables de l'enceinte étanche 1 sont les faces latérales 5, 6.

Selon une variante de réalisation non représentée mais basée sur le même concept, l'enceinte étanche constituant l'aquarium forme un volume cubique dont deux de ses faces opposées sont chacune formées par deux parties repliables sur elles-mêmes de forme et de dimension identiques, les deux autres étant d'un seul tenant.

Selon un autre exemple de réalisation non représenté, l'enceinte étanche constituant l'aquarium forme un volume de section hexagonale dont chaque face est identique, au moins deux faces opposées étant constituées de deux parties de forme et de dimension identiques repliables sur elles-mêmes par rapport aux faces qui leur sont adjacentes, les autres étant tout ou en partie d'un seul tenant.

Selon une variante du cas précédent, l'enceinte étanche constituant l'aquarium forme un volume de section hexagonale dont chaque face est identique, mais dont au moins deux faces opposées sont d'un seul tenant, les autres étant tout ou en partie constituées de deux parties repliables sur elles-mêmes et par rapport aux faces qui leur sont adjacentes.

Selon un autre exemple également envisagé mais non représenté, l'enceinte étanche constituant l'aquarium forme un volume de section pentagonal dont toutes les faces sont identiques et sont toutes formées par deux parties de forme et de dimension également identiques, repliables sur elles-mêmes et par rapport aux faces qui leur sont adjacentes.

Selon une autre caractéristique de l'invention, l'articulation 7 reliant deux parties 5a, 5b - 6a, 6b de face 5, 6 pliables entre elles ou par rapport aux faces 3, 4 ou demi-faces, qui leur sont adjacentes, est constituée par un joint apte à assurer à la fois l'assemblage, la souplesse et l'étanchéité entre les faces ou demi-faces.

Ce joint peut être constitué par un cordon de colle polyuréthane, de silicone, par un profilé en H en caoutchouc ou en silicone.

Par ailleurs, le fond 2 est une feuille souple et pliable pouvant être également en silicone ou en caoutchouc. Sa liaison avec les faces 3, 4, 5, 6 peut se faire également avec une colle polyuréthane ou en silicone.

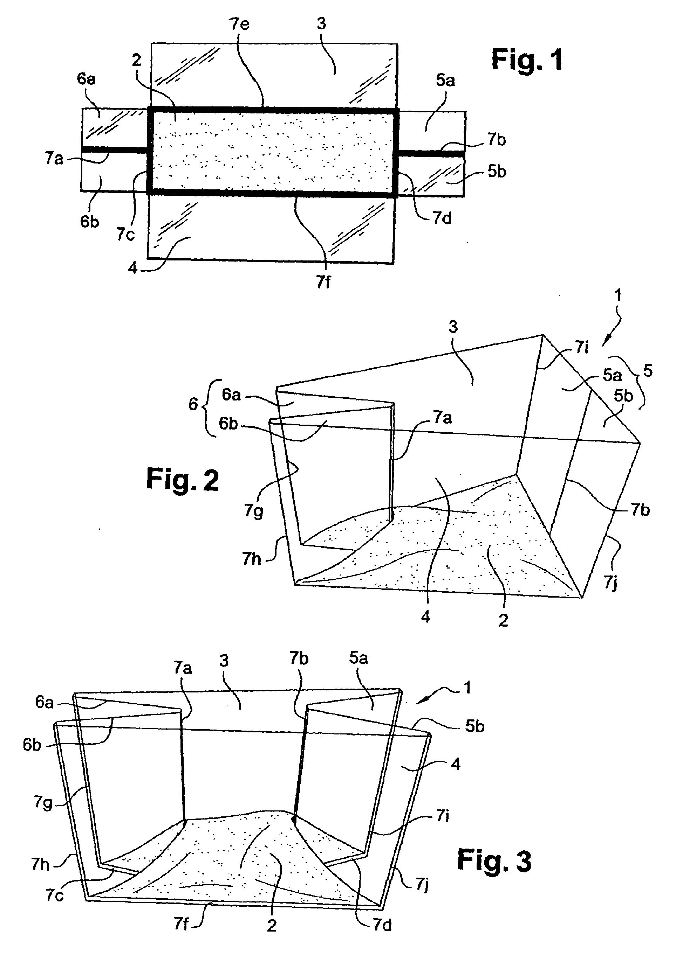

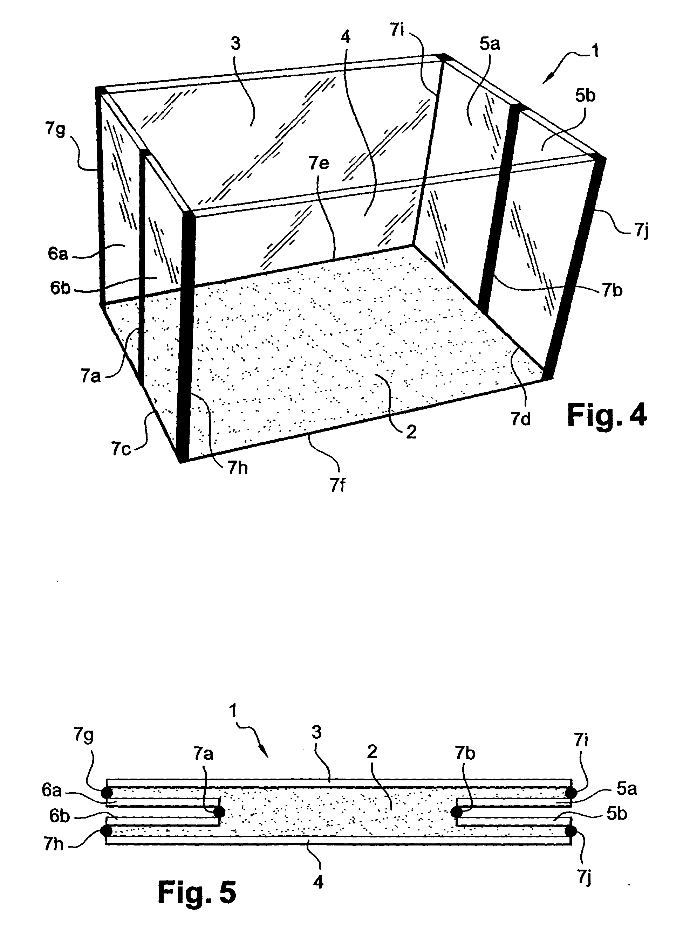

Comme le montre particulièrement bien les figures 1, 2 et 5, l'enceinte étanche constituant l'aquarium est réalisé grâce aux joints :
- 7a reliant les demi-faces 6a, 6b pour constituer une face pliante 6
- 7b reliant les deux faces pliantes 5a, 5b pour constituer la face pliante 5
- 7c reliant la face pliante 6 à la bâche de fond 2
- 7d reliant la face pliante 5 à la bâche de fond 2
- 7e reliant la face latérale rigide 3 à la bâche de fond 2
- 7f reliant la face latérale rigide 4 à la bâche de fond 2
- 7g reliant la face arrière 3 à la face latérale pliante 6
- 7h reliant la face avant 4 à la face latérale pliante 6
- 7i reliant la face arrière 3 à la face latérale pliante 5
- 7j reliant la face avant 4 à la face latérale 5.

Bien entendu, l'enceinte étanche constituant le contenant, pourra avoir toutes autres destinations que celle de l'aquarium, décrit à titre d'exemple non limitatif.

## Revendications

1. Contenant, notamment aquarium, destiné à l'élevage des poissons d'agrément, du type constitué par une enceinte étanche (1) repliable sur elle-même dans un même plan, en vue de son transport, et qui est formée par un fond constitué par une bâche imperméable souple (2) associée avec des faces latérales rigides quadrangulaires (3, 4, 5, 6) pour définir un volume utile lors d'un déploiement, en vue de son utilisation, deux au moins desdites faces rigides en vis-à-vis étant formée par chacune des deux parties (5a, 5b - 6a, 6b) de formes et de dimensions identiques, repliables sur elles-mêmes, préférentiellement vers l'intérieur de l'enceinte (1), par l'intermédiaire d'une articulation (7), les deux autres (3, 4) étant d'un seul tenant, de manière à permettre le pliage de l'enceinte ou son développement, la rendant auto-porteuse par la seule pression de l'eau, lors de sa mise en service.

2. Contenant selon la revendication 1, **caractérisé en ce que** l'enceinte étanche (1) qu'il constitue forme un volume parallélépipédique présentant une face avant (4), une face arrière (3) et deux faces latérales (5, 6), deux de ces faces en vis-à-vis (5, 6) étant chacune formée par deux parties (5a, 5b - 6a, 6b) repliables sur elles-mêmes, de forme et de dimension identiques, les deux autres (3, 4) étant d'un seul tenant.

3. Contenant selon la revendication 2, **caractérisé en ce que** les faces opposées repliables de l'enceinte étanche (1) sont les faces latérales (5, 6).

4. Contenant selon la revendication 1, **caractérisé en ce que** l'enceinte étanche qu'il constitue forme un volume cubique dont deux de ses faces opposées sont chacune formées par deux parties repliables sur elles-mêmes de forme et de dimension identiques, les deux autres étant d'un seul tenant.

5. Contenant selon la revendication 1, **caractérisé en ce que** l'enceinte étanche qu'il constitue forme un volume de section hexagonale dont chaque face est identique, au moins deux faces opposées étant constituées de deux parties de forme et de dimension identiques repliables sur elles-mêmes par rapport aux faces qui leur sont adjacentes, les autres étant tout ou en partie d'un seul tenant.

6. Contenant selon la revendication 1, **caractérisé en ce que** l'enceinte étanche qu'il constitue forme un volume de section hexagonale dont chaque face est identique, au moins deux faces opposées étant d'un seul tenant, les autres étant tout ou en partie constituées de deux parties repliables sur elles-mêmes et par rapport aux faces qui leur sont adjacentes.

7. Contenant selon la revendication 1, **caractérisé en ce que** l'enceinte étanche qu'il constitue forme un volume de section pentagonal dont toutes les faces sont identiques et sont toutes formées par deux parties de forme et de dimension également identiques, repliables sur elles-mêmes et par rapport aux faces qui leur sont adjacentes.

8. Contenant selon l'une des revendications 1 à 7, **caractérisé en ce que** l'articulation (7) reliant deux parties (5a, 5b - 6a, 6b) de face (5, 6) pliables entre elles ou par rapport aux faces (3, 4) ou demi-faces, qui leur sont adjacentes, est constituée par un joint apte à assurer à la fois l'assemblage, la souplesse et l'étanchéité entre les faces ou demi-faces.

9. Contenant selon la revendication 8, **caractérisé en ce que** le joint est constitué par un cordon silicone.
